# EUROPEAN PATENT SPECIFICATION

(11) **EP 4 158 266 B1**
(45) Date of publication and mention of the grant of the patent: **09.12.2026**
(21) Application number: 21728318.3
(22) Date of filing: 27.05.2021
(51) Int. Cl.: F27D 25/00

(54) **METHOD AND APPARATUS FOR HOT OR COLD CLEANING COMBUSTION SLAG BY MEANS OF AN EXPLOSIVE SHOCK WAVE**
VERFAHREN UND VORRICHTUNG ZUR HEISS- ODER KALTREINIGUNG VON VERBRENNUNGSSCHLACKE MITTELS EINER EXPLOSIONSSTOSSWELLE
PROCÉDÉ ET APPAREIL DE NETTOYAGE À CHAUD OU À FROID DE SCORIES DE COMBUSTION AU MOYEN D'UNE ONDE DE CHOC EXPLOSIVE

(30) Priority: 28.05.2020 IT 202000012658
(43) Date of publication of application: 05.04.2023
(73) Proprietor: Bio Protect Group Srl, 01034 Fabrica di Roma (VT) (IT)
(72) Inventor: MARTINEZ, Mario, 01034 Fabrica di Roma (VT) (IT); MARTINEZ, Marco, 01034 Fabrica di Roma (VT) (IT)
(74) Representative: Dragotti & Associati S.P.A.
(86) International application number: PCT/IB2021/054622
(87) International publication number: WO 2021/240414

(56) References cited:
- EP-B1- 2 788 703
- EP-B1- 3 105 523
- WO-A1-2013/073776
- US-B1- 6 755 156

## Description

The present invention relates to an innovative method and an associated cleaning apparatus of the type which uses an explosive shock wave. This type of apparatus is generally used to remove combustion slag inside combustion plants, such as waste incineration plants or the boilers of thermal power stations and/or the heat exchangers which are crossed by the combustion fumes downstream of these plants. During combustion the (liquid, gaseous or solid) fuels used generate ash which, during convection of the flow of hot fumes, strike the pipes and the inner walls of the plants and deposit slag which accumulates and solidifies on the metal surfaces of the pipes and the walls. This slag not only may obstruct the flow channels of the fumes but also reduces substantially the heat exchange and creates imbalances for example during the production of the steam which is used to supply the turbines generating electric energy. In addition to the harmful increase in the temperatures during the process, the partial occlusion of the fume flow channels results in an increase in the flow speed of the fumes inside the narrow channels and causes serious abrasion of the ferrous metals.

Periodic cleaning operations are therefore necessary in order to remove the slag.

Conventional cleaning involves a long plant shut-down time, also for a period of a few weeks, owing to the need to switch off and cool the plant and provide a series of scaffolding inside the boilers so that the cleaning staff may have access thereto. Moreover, during this activity the operating staff are obliged to work in a dusty and unhealthy environment.

The shut-down also has a significant impact on the plant management economy, both due to the interruption in production during shut-down and to the fixed costs and costs of restarting the plant.

Cleaning methods using steam blowers which lighten the volatile dust, but not sufficiently, have also been proposed, as well as shaking methods which are used on tube banks, and/or water flooding methods, although these generate wet vapours and in any case always have a bland and inadequate effect.

For some time, therefore, explosive cleaning techniques have been proposed, these being able to be used also with the plant still in operation or with just short interruptions in production. These techniques involve the introduction and ignition of explosive charges inside the chambers to be cleaned so that the shock wave produced breaks up the deposits and detaches them from the internal walls.

For example explosive cleaning systems are known in which solid explosives (for example in the form of a detonation cord) are placed close to the surface to be cleaned and are then ignited by means of an electric device.

In order to avoid premature explosions when the explosive is used with plants which are still hot or even in operation, systems for cooling the explosive charge in order to keep the temperature low during positioning of the charge inside the plant have also been proposed. For example EP1067349 describes a cooling envelope which completely surrounds the explosive and inside which a coolant, for example water, is pumped in order to keep the explosive device in a cooled state until it is ready for detonation.

The use of explosives is, however, disadvantageous owing to the need to provide explosives which, in addition to having a high cost, require a series of authorizations limiting the free use thereof and which in any case pose serious risks due to accidental and/or random ignition.

Moreover, detonation occurs at a supersonic speed (speeds of up to 7000/8000 m/sec) and the shock wave which is produced may on the one hand be ineffective for certain types of slag and on the other hand damage the metal structures of the plant. For example, the explosive impact may result in the failure of certain welded joints if the explosive is positioned to close to them, may cause cracking or even result in the formation of small holes, in particular where the ferrous structure has already been abraded by the flow of fumes.

In order to attempt to overcome the drawbacks associated with the use of solid explosives, methods using an explosion technique involving gaseous mixtures (inflammable gas or oxidising gas) which produce shock waves at a lower speed have also been proposed.

One of these methods is for example described in EP 1,362,213 which involves the use of a special lance which has at its front end a balloon which is inflated with the gas mixture which is then ignited.

This method is also subject to limitations in the efficiency of cleaning hardened slag and has little or no effect on the slag which has accumulated between the pipes precisely because of the low speed of propagation of the deflagrating gas which generally reaches speeds on average of 300 m/s. Moreover, the use of gas combined with the balloon involves risks since the balloon, which is usually made of plastic, has flexible walls which are relatively weak and which, when exposed to the high temperatures and the white-hot pipes, may explode prematurely or even burn and become perforated, losing gas, so that the correct explosive effect is no longer produced.

In any case, the inflated balloon hinders or prevents entirely the introduction of the exploding device inside narrow passages such as those present between the heat exchange tubes of the plant where the free space may be even only 100 mm. These passages are therefore not adequately cleaned with the techniques which use gas.

This all results in a very weak and prolonged cleaning action, without obtaining a fully satisfactory result, with the need for much more frequent cleaning operations.

US6755156 thermally insulates the explosive head to prevent the heat prematurely detonating the explosive before it is properly positioned. Insulation is achieved by surrounding the explosive with a continuously circulating liquid or gaseous refrigerant.

WO2013/073776 discloses a projectile having an internally generating gas compound and to be fired from an air cannon into a furnace.

EP2788703 and EP3105523 have a container with an explosive mixture and in which the mixture is exploded for removing deposits from the surfaces of cavities of containers to be cleaned.

The general object of the present invention is to overcome the drawbacks of the known explosive cleaning techniques by providing a cleaning apparatus and method which are able to achieve adequate cleaning with greater safety and fewer risks of damage to the plant.

In view of this object, the idea which has occurred is to provide, according to the invention defined by claim 1.

Still according to the principles of the present invention defined by claim 8.

In order to illustrate more clearly the innovative principles of the present invention and its advantages compared to the prior art, an example of embodiment applying these principles will be described below with the aid of the attached drawings. In the drawings:
- Figure 1 shows a schematic longitudinally sectioned view of an apparatus according to the invention,
- Figure 2 shows a schematic, longitudinally sectioned, enlarged view of the head part of the apparatus according to Figure 1;
- Figure 3 shows a schematic, longitudinally sectioned, enlarged view of a variation of embodiment of the apparatus according to the invention.

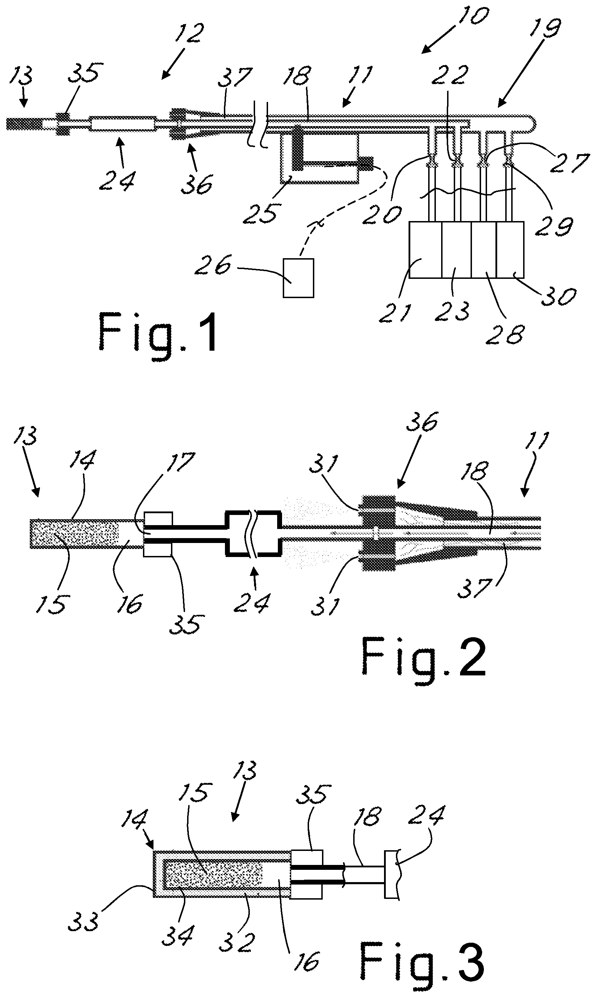

With reference to the figures, Figure 1 shows a cleaning apparatus provided according to the invention and denoted overall by 10.

The apparatus 10 comprises a lance 11 with a front or head end 12 which is intended to be introduced into the chamber of the plant to be cleaned of the slag encrusted on the inner walls. The lance may have any suitable length for reaching the relevant points which are to be cleaned. The lance may for example be made of stainless steel or other suitable material so as to be able withstand knocks and heat.

An explosive element in the form of an exploding cartridge 13 is fixed onto the head of the lance. As can be clearly seen in Figure 2, the cartridge 13 comprises an external container or casing 14 which contains an explosive compound 15 and which has an internal space 16 intended to communicate with the terminal end 17 of a duct 18 of the lance when the cartridge is mounted on the front end of the lance. The container cartridge may be substantially rigid.

Preferably, the explosive compound may be a substantially solid explosive compound. Here the term "solid or substantially solid explosive compound" is understood as meaning in any case not only a compact mass, but also an explosive mixture of corpuscular solid material, such as an explosive in powder form, or also a relatively soft or also very soft explosive mixture. For example it may be an explosive gel. An exploding gas or liquid could also be used.

The explosive compound may be for example a powdery explosive compound, also of the type normally used in pyrotechnics. Such a compound may comprise components mixed and blended using the same techniques as in fireworks and in the stoichiometric amounts known in the pyrotechnics sector.

For example, a suitable mixture may consist of 3% to 97% of a combustible substance and 97% to 3% of a comburent substance. By way of example, the products which may be used may comprise potassium nitrate, sulphur, carbon, gum arabic, etc., and the family of perchlorates, such as potassium perchlorate, aluminium perchlorate, sodium perchlorate, magnesium perchlorate, and the peroxide family, etc.

Obviously, the quantity inserted in the exploding cartridge may vary depending on the mixture and the power which the operator considers to be necessary in order to break up the slag which must be removed and cleaned. For example, the weight of the pyrotechnic mixture may vary from a total of five grammes of mixture up to five hundred or more grammes of mixture. The volume of the cartridge may vary as a result.

In the proximity of the rear end 19, the lance 11 has a connector 20 which is connected to the internal duct 18 for connection thereof to a source 21 of a suitable inflammable gas. The inflammable gas may also be mixed with a suitable comburent fluid. To ensure safety, mixing may be performed advantageously inside the lance itself and, preferably, in the vicinity of its head.

For this purpose, in the proximity of the rear end 19, the lance 11 may have also a second connector 22 which is connected to the internal duct 18 for connection thereof to a source 23 of a suitable comburent gas.

The sources may consist of suitable gas cylinders of the conventional type provided with known pressure and flow regulators and reducers.

In the proximity of terminal end 17 of the duct 18 the duct 18 advantageously comprise a pre-ignition chamber 24. Mixing of the combustible gas and the comburent is performed towards the head end of the lance (for example inside the pre-ignition chamber), keeping the gas duct 18 separate from that supplying the comburent until the desired moment for mixing, as may be easily imagined by the person skilled in the art. The ducts inside the lance may also be made of steel.

The inflammable gas may be any inflammable gas suitable for being used in flushing. For example it may comprise ethane, methane, LPG, butane, hydrogen, acetylene, etc.

The comburent will be suitably chosen so as to allow the correct ignition of the type of inflammable gas used, as may be easily imagined by the person skilled in the art. For example, oxygen or also simple air taken from the surrounding environment may be used.

In order to ignite the gas which reaches the internal space 16 of the cartridge, there is an ignition device 25, advantageously of the electric type, which may be operated remotely by means of a suitable remote control 26, for example connected to the ignition device 25 by means of a suitable electric cable.

The cartridge 13 may be advantageously mounted on the head of the lance by means of a suitable connector 35, for example of screw, bayonet or clamp type (known per se and therefore not further shown or described here) so as to be able to be easily mounted before explosion and replaced with a new cartridge after the explosion.

Advantageously, the lance may also comprise a system for cooling the cartridge in order to avoid possible premature explosions if the lance is inserted in a plant which is in operation or which in any case is still excessively hot.

This cooling system may comprise advantageously a dispensing device 36 for emission of an atomized cooling fluid. This dispensing device is preferably arranged in the vicinity of the head of the lance so as to fully envelop the cartridge with the cooling liquid. This liquid is supplied under pressure via a special connector 27 at the rear end of the lance and is supplied from a suitable source 28. For example, the cooling liquid may also be water.

For suitable atomization of the cooling liquid, pressurized air may also be supplied by means of a further connector 29 connected to a compressed air source 30.

As can be clearly seen in Figure 2, the dispensing device 36 may have atomization nozzles 31 arranged around the end of the lance so as to produce a suitable cloud of coolant which is sufficiently uniform to keep the temperature of the cartridge within a predetermined safety limit.

The coolant may flow inside an interspace 37 around the gas ducts 18 so as to cool also these ducts and keep the internal temperature of the lance within safety values. The interspace may also be defined by the same outer wall of the lance in order to cool also this external wall.

During use, it is sufficient to mount the cartridge with the explosive on the tip of the lance and position the cartridge at the desired point inside the chamber to be cleaned. Once the exploding cartridge is positioned at the point to be cleaned, the gaseous mixture may then be blown inside it and then ignited by means of the ignition device 25 (for example by means of a spark produced in the vicinity of the chamber 24). The ignition of the gas produces an explosion inside the cartridge 13 which detonates by means of flame induction the already primed exploding mixture 15. The first explosion of the gas causes also the ignition of the explosive inside the cartridge which will in turn explode. The double explosion will therefore destroy the container of the cartridge, which is made of suitably yielding material (for example thin metal, plastic, cardboard, fabric, etc.), producing the shock wave which will cause separation of the slag. In the case where the container of the cartridge is made of metal it is possible to use yielding metals such as aluminium.

With the apparatus according to the invention a deflagration of gas followed by a detonation of the explosive is thus obtained. The combined effect, which may be called here "deto-deflagration" enables a new and more effective action to be achieved on the slag without damaging the structures of the plant.

Owing to the method of the invention, the speed of propagation of the explosion will be generally between 700 and 900 ms and therefore lower than the (usually supersonic) speed of detonation of an explosive obtained by the prior art which uses solid explosives, but more than twice the speed of the shock wave produced in the known art which uses gas lances and the deflagration of gaseous mixtures.

The ignition device 25 may also comprise a per se known electronic system (for example a suitably programmed PLC) to manage the operation with a suitable consensus security system so as to avoid any human error which may affect the safety in the cleaning process.

In the case where the cooling system is present it may be activated at the suitable moment (for example immediately before insertion of the lance in the chamber to be cleaned) so that the explosive charge in the cartridge is not negatively influenced by the temperature inside the chamber.

Figure 3 shows a variation of embodiment of the cartridge 13 which forms the exploding element according to the invention. In this variant, the cartridge 13 has a double-wall casing 15 so as to define an interspace 32 between the outer wall 33 and the inner wall 34. This interspace is advantageously filled with abrasive material (for example sand, ground glass, pellets of recycled plastic material, etc.). In this way, upon explosion of the cartridge, the abrasive material is projected into the chamber to be cleaned and performs forced sandblasting of the surfaces. Complete sandblasting cleaning is thus obtained without having to stop necessarily the plant, as instead is necessary with conventional known sandblasting activities which are performed only with the production plant switched off and cold.

In any case, the front end of the lance (for example the coolant dispensing device and the engaging connection for the cartridge) may also be designed so as to be replaceable, when damaged by the explosion, for example forming it as a simple pipe, also with variations in diameter, engaged at the front onto the remaining part of the lance.

In any case, it is also possible to provide in the cartridge a partition for isolation of the explosive from the gas receiving and gas ignition zone. This partition may for example be made of material which is gas-permeable or also simply destructible following ignition of the gas (for example by means of melting, impact or burning).

At this point it is clear how the objects of the invention have been achieved, using a substantially solid mixture which is contained in a suitable container inside which a mixture of inflammable gas and associated oxidising agent is introduced, said mixture, once the cartridge has been positioned in the zone to be cleaned, being ignited so as to cause an explosion inside the cartridge which ignites the already primed exploding mixture.

It has been found that with a cleaning method according to the invention, which uses an explosive material inside a casing or cartridge and an inflammable gas used to denote the explosive material, a more effective shock wave action is obtained on the slag, even of the most resistant and rocky type, avoiding the risk of damaging the structures to be cleaned.

Moreover, with the method and the apparatus according to the invention, it is possible both to break up the resistant and rocky slag present on the walls of a chamber and to remove the slag which has accumulated between the tubes of the tube bundle, since the exploding "cartridge" container may have a very narrow cross-section and may be inserted between the tubes, so as to position it as close as possible to the slag to be broken up.

Owing to the fact that the cartridge container must not necessarily be formed by a balloon of very thin and flexible material which must inflate with the gas, it may be introduced into combustion plants which are already active and operating at high temperatures (up to 1200 degrees for example) without any danger.

Moreover, the use of a cooling system as described reduces yet further the risk of unexpected explosions or damage.

Moreover, no electrical nor mechanical ignition system is inserted inside the cartridge, unlike in the known solid explosive systems which require triggering of a detonator or an igniter and/or a combustion fuse and which, for this reason, are made with explosive compounds which are already primed with the explosive mixture and with the ignition system inserted, with the risk of accidental detonation during transportation to the place of use.

With the system according to the invention the cartridge with the explosive may also be prepared on-site instead of prior to transport. In this way, the components of the exploding mixture may also be transported in separate sealed containers, avoiding contact between them. Transportation may therefore be performed with even greater and total safety.

The gases used may also be transported in normal approved pressurised containers so as to flow directly towards the cartridge via the flexible pipes and the shock-resistant and heat-resistant metal tubes without the use of secondary intercepting containers for measuring the quantities, since the gaseous flows and the stoichiometric measurements may be easily managed electronically and automatically, as may now be imagined by the person skilled in the art.

Obviously the description given above of embodiments applying the innovative principles of the present invention is provided by way of example of these innovative principles and must therefore not be regarded as limiting the scope of the rights claimed herein.

For example, the exploding cartridge may have forms, dimensions and proportions different from those shown here, also so as to adapt to particular requirements with regard to the explosive charge and/or its insertion inside particularly narrow and/or winding passages in order to obtain a more effective action on the slag which is present between the tubes of the boiler and obstructs the flow of the hot fumes of the boiler.

The exploding charge may also be composed of two or more components, which may also be separate, depending on the type of explosive used, i.e. of a powdery nature or not. Likewise the gas may be composed of gas mixtures, at least one of which is inflammable, and one or more oxidising agents.

Even though the use of a rigid lance is preferable with the method according to the invention, the method according to the invention may envisage a different system for supplying the gas and for ignition thereof. For example, it is possible to envisage flexible pipes which are connected to a container with the explosive compound.

The apparatus according to the invention may also be easily provided with safety systems which can be manually activated by the operator or can be automatically operated if necessary and are able to interrupt instantaneously the explosion process should a danger state arise. For example, a system of electrovalves which interrupt the gas flow and also a cartridge flooding system for deactivating the internal explosive may be used.

## Claims

1. Method for the explosive cleaning of combustion slag, comprising the steps of preparing a container with an explosive compound, the container with the explosive being mounted on the head of a lance for its positioning during use, positioning the container by means of the lance at a desired point inside a chamber to be cleaned, and, after the positioning, introducing into the container a flammable gas flow with a suitable comburent by ducts from gas sources with the gas that is fed into the container through the lance, and igniting this gas so as to produce with it the explosion of the explosive compound with consequent destruction of the container and emission of a shock wave from the container to break up the slag, the flammable gas being supplied in a pre-ignition chamber which is provided near the head end of the lance for the gas supplied to the container.

2. Method according to claim 1, **characterized in that** the explosive compound is a substantially solid compound.

3. Method according to claim 2, **characterized in that** the substantially solid compound is in the form of a powder or gel.

4. Method according to claim 1, **characterized in that** the container is formed with an interspace filled with abrasive material which is projected outwards by the explosion.

5. Method according to claim 1, **characterized in that** the explosive compound comprises one or more of the following components: potassium nitrate, sulphur, carbon, gum arabic, the family of perchlorates, potassium perchlorate, aluminium perchlorate, sodium perchlorate, magnesium perchlorate, and the peroxide family.

6. Method according to claim 1, **characterized in that** the gas comprises one or more of the following components: ethane, methane, LPG, butane, hydrogen, acetylene.

7. Method according to claim 1, **characterized in that** the comburent comprises air or oxygen.

8. Apparatus (10) for the explosive cleaning of combustion slag, comprising a lance (11) and an explosive element (13) mounted on the head end of the lance, in which the explosive element (13) comprises a container (14) inside which an explosive compound (15) is housed and the lance (11) comprises ducts (18) connected to sources (21, 23) of flammable gas which can be ignited with a suitable comburent, these ducts introducing the gas upon command into said container (14) containing the explosive compound (15), the lance (11) further comprising a device (25, 26) for the controlled ignition of the flammable gas so as to produce with this gas the explosion of the explosive compound present in the container (14), **characterized in that** the lance (11) near its head end (12) comprises a pre-ignition chamber (24) for the gas supplied to the container (14).

9. Apparatus according to claim 8, **characterized in that** the lance is a rigid lance.

10. Apparatus according to claim 8, **characterized in that** the explosive compound is a substantially solid compound.

11. Apparatus according to claim 10, **characterized in that** the substantially solid compound is in the form of powder or gel.

12. Apparatus according to claim 8, **characterized in that** the container (14) is formed with an interspace (32) which contains abrasive material intended to be projected outwards by the explosion.

13. Apparatus according to claim 8, **characterized in that** the lance (11) near its head end (12) comprises a dispensing device (36) with nozzles for the emission of a cooling fluid towards the container (14).

14. Apparatus according to claim 8, **characterized in that** the explosive compound comprises one or more of the following components: potassium nitrate, sulphur, carbon, gum arabic, the family of perchlorates, potassium perchlorate, aluminium perchlorate, sodium perchlorate, magnesium perchlorate, and the peroxide family.

15. Apparatus according to claim 8, **characterized in that** the sources (21, 23) provide a gas comprising one or more of the following components: ethane, methane, LPG, butane, hydrogen, acetylene, and possibly a comburent composed of air or oxygen.

## Patentansprüche

1. Verfahren zur explosiven Reinigung von Verbrennungsschlacke, umfassend die Schritte des Vorbereitens eines Behälters mit einer explosiven Verbindung, wobei der Behälter mit dem Sprengstoff zur Positionierung während des Gebrauchs am Kopf einer Lanze angebracht wird, des Positionierens des Behälters mittels der Lanze an einer gewünschten Stelle innerhalb einer zu reinigenden Kammer und, nach dem Positionieren, des Einleitens eines Stroms aus brennbarem Gas mit einem geeigneten Verbrennungsmittel über Leitungen von Gasquellen in den Behälter, wobei das Gas über die Lanze in den Behälter geleitet wird, und des Zündens dieses Gases, um damit die Explosion der explosiven Verbindung zu bewirken, was zur Zerstörung des Behälters und zur Aussendung einer Stoßwelle aus dem Behälter führt, um die Schlacke aufzubrechen, wobei das brennbare Gas in eine Vorzündkammer geleitet wird, die nahe dem Kopfende der Lanze für das in den Behälter geleitete Gas vorgesehen ist.

2. Verfahren nach Anspruch 1, **dadurch gekennzeichnet, dass** die explosive Verbindung eine im Wesentlichen feste Verbindung ist.

3. Verfahren nach Anspruch 2, **dadurch gekennzeichnet, dass** die im Wesentlichen feste Verbindung in Form eines Pulvers oder Gels vorliegt.

4. Verfahren nach Anspruch 1, **dadurch gekennzeichnet, dass** der Behälter mit einem Zwischenraum ausgebildet ist, der mit Schleifmaterial gefüllt ist, das durch die Explosion nach außen geschleudert wird.

5. Verfahren nach Anspruch 1, **dadurch gekennzeichnet, dass** die explosive Verbindung eine oder mehrere der folgenden Komponenten umfasst: Kaliumnitrat, Schwefel, Kohlenstoff, Gummi arabicum, die Perchloratgruppe, Kaliumperchlorat, Aluminiumperchlorat, Natriumperchlorat, Magnesiumperchlorat und die Peroxidgruppe.

6. Verfahren nach Anspruch 1, **dadurch gekennzeichnet, dass** das Gas eine oder mehrere der folgenden Komponenten umfasst: Ethan, Methan, Flüssiggas (LPG), Butan, Wasserstoff, Acetylen.

7. Verfahren nach Anspruch 1, **dadurch gekennzeichnet, dass** das Verbrennungsmittel Luft oder Sauerstoff umfasst.

8. Vorrichtung (10) zur explosiven Reinigung von Verbrennungsschlacke, umfassend eine Lanze (11) und ein am Kopfende der Lanze angebrachten explosives Element (13), wobei das explosive Element (13) einen Behälter (14) umfasst, in dessen Innerem eine explosive Verbindung (15) untergebracht ist, und die Lanze (11) Leitungen (18) umfasst, die mit Quellen (21, 23) für brennbares Gas verbunden sind, das mit einem geeigneten Verbrennungsmittel gezündet werden kann, wobei diese Leitungen das Gas auf Befehl in den die explosive Verbindung (15) enthaltenden Behälter (14) einleiten, wobei die Lanze (11) ferner eine Vorrichtung (25, 26) zur kontrollierten Zündung des brennbaren Gases umfasst, um mit diesem Gas die Explosion der im Behälter (14) vorhandenen explosiven Verbindung zu bewirken, **dadurch gekennzeichnet, dass** die Lanze (11) nahe ihrem Kopfende (12) eine Vorzündkammer (24) für das in den Behälter (14) geleitete Gas aufweist.

9. Vorrichtung nach Anspruch 8, **dadurch gekennzeichnet, dass** die Lanze eine starre Lanze ist.

10. Vorrichtung nach Anspruch 8, **dadurch gekennzeichnet, dass** die explosive Verbindung eine im Wesentlichen feste Verbindung ist.

11. Vorrichtung nach Anspruch 10, **dadurch gekennzeichnet, dass** die im Wesentlichen feste Verbindung in Form von Pulver oder Gel vorliegt.

12. Vorrichtung nach Anspruch 8, **dadurch gekennzeichnet, dass** der Behälter (14) mit einem Zwischenraum (32) ausgebildet ist, der Schleifmaterial enthält, das durch die Explosion nach außen geschleudert werden soll.

13. Vorrichtung nach Anspruch 8, **dadurch gekennzeichnet, dass** die Lanze (11) nahe ihrem Kopfende (12) eine Abgabevorrichtung (36) mit Düsen zum Ausstoßen eines Kühlfluids in Richtung des Behälters (14) umfasst.

14. Vorrichtung nach Anspruch 8, **dadurch gekennzeichnet, dass** die explosive Verbindung eine oder mehrere der folgenden Komponenten umfasst: Kaliumnitrat, Schwefel, Kohlenstoff, Gummi arabicum, die Perchloratgruppe, Kaliumperchlorat, Aluminiumperchlorat, Natriumperchlorat, Magnesiumperchlorat und die Peroxidgruppe.

15. Vorrichtung nach Anspruch 8, **dadurch gekennzeichnet, dass** die Quellen (21, 23) ein Gas bereitstellen, das eine oder mehrere der folgenden Komponenten umfasst: Ethan, Methan, Flüssiggas (LPG), Butan, Wasserstoff, Acetylen und gegebenenfalls ein Verbrennungsmittel, das aus Luft oder Sauerstoff besteht.

## Revendications

1. Procédé permettant le nettoyage par explosion de scories de combustion, comprenant les étapes consistant à préparer un récipient avec un composé explosif, le récipient avec l'explosif étant monté sur la tête d'une lance pour son positionnement lors de l'utilisation, positionner le récipient au moyen de la lance au niveau d'un point souhaité à l'intérieur d'une chambre à nettoyer, et, après le positionnement, introduire dans le récipient un flux de gaz inflammable avec un comburant approprié par des conduits à partir de sources de gaz avec le gaz qui est acheminé dans le récipient à travers la lance, et allumer ce gaz de manière à produire avec celui-ci l'explosion du composé explosif avec destruction consécutive du récipient et émission d'une onde de choc à partir du récipient pour fragmenter les scories, le gaz inflammable étant fourni dans une chambre de pré-allumage qui est prévue à proximité de l'extrémité avant de la lance pour le gaz fourni au récipient.

2. Procédé selon la revendication 1, **caractérisé en ce que** le composé explosif est un composé sensiblement solide.

3. Procédé selon la revendication 2, **caractérisé en ce que** le composé sensiblement solide se présente sous la forme d'une poudre ou d'un gel.

4. Procédé selon la revendication 1, **caractérisé en ce que** le récipient est formé avec un espace intermédiaire rempli d'un matériau abrasif qui est projeté vers l'extérieur par l'explosion.

5. Procédé selon la revendication 1, **caractérisé en ce que** le composé explosif comprend un ou plusieurs parmi les composants suivants : le nitrate de potassium, le soufre, le carbone, la gomme arabique, la famille des perchlorates, le perchlorate de potassium, le perchlorate d'aluminium, le perchlorate de sodium, le perchlorate de magnésium, et la famille des peroxydes.

6. Procédé selon la revendication 1, **caractérisé en ce que** le gaz comprend un ou plusieurs parmi les composants suivants : l'éthane, le méthane, le GPL, le butane, l'hydrogène, l'acétylène.

7. Procédé selon la revendication 1, **caractérisé en ce que** le comburant comprend de l'air ou de l'oxygène.

8. Appareil (10) permettant le nettoyage par explosion de scories de combustion, comprenant une lance (11) et un élément explosif (13) monté à l'extrémité de la tête de la lance, dans lequel l'élément explosif (13) comprend un récipient (14) à l'intérieur duquel un composé explosif (15) est logé et la lance (11) comprend des conduits (18) raccordés à des sources (21, 23) de gaz inflammable qui peuvent être allumés avec un comburant approprié, ces conduits introduisant le gaz sur commande dans ledit récipient (14) contenant le composé explosif (15), la lance (11) comprenant en outre un dispositif (25, 26) permettant l'allumage contrôlé du gaz inflammable de manière à produire avec ce gaz l'explosion du composé explosif présent dans le récipient (14), **caractérisé en ce que** la lance (11) à proximité de l'extrémité de sa tête (12) comprend une chambre de pré-allumage (24) pour le gaz fourni au récipient (14).

9. Appareil selon la revendication 8, **caractérisé en ce que** la lance est une lance rigide.

10. Appareil selon la revendication 8, **caractérisé en ce que** le composé explosif est un composé sensiblement solide.

11. Appareil selon la revendication 10, **caractérisé en ce que** le composé sensiblement solide se présente sous la forme de poudre ou de gel.

12. Appareil selon la revendication 8, **caractérisé en ce que** le récipient (14) est formé avec un espace intermédiaire (32) qui contient un matériau abrasif destiné à être projeté vers l'extérieur par l'explosion.

13. Appareil selon la revendication 8, **caractérisé en ce que** la lance (11), à proximité de son extrémité de tête (12), comprend un dispositif de distribution (36) avec des buses permettant l'émission d'un fluide de refroidissement vers le récipient (14).

14. Appareil selon la revendication 8, **caractérisé en ce que** le composé explosif comprend un ou plusieurs parmi les composants suivants : le nitrate de potassium, le soufre, le carbone, la gomme arabique, la famille des perchlorates, le perchlorate de potassium, le perchlorate d'aluminium, le perchlorate de sodium, le perchlorate de magnésium, et la famille des peroxydes.

15. Appareil selon la revendication 8, **caractérisé en ce que** les sources (21,23) fournissent un gaz comprenant un ou plusieurs parmi les composants suivants : l'éthane, le méthane, le GPL, le butane, l'hydrogène, l'acétylène, et éventuellement un comburant composé d'air ou d'oxygène.
